# EUROPEAN PATENT APPLICATION

(11) **EP 3 812 989 A1**
(43) Date of publication of application: **28.04.2021**
(21) Application number: 20203420.3
(22) Date of filing: 22.10.2020
(51) Int. Cl.: G06Q 10/06, G06Q 30/02, G06Q 30/06

(54) **A METHOD, SYSTEM AND COMPUTER PROGRAM PRODUCT TO EFFICIENTLY CONFIGURE, CONTROL AND/OR SCHEDULE ELECTRONIC DEVICES IN A SITE**

(30) Priority: 24.10.2019 SE 1951209
(71) Applicant: Nordic Light Group Development AB, 931 24 Skelleftea (SE)
(72) Inventor: SKÖLD, Nicklas, 931 54 Skellefteå (SE); GYLLENGAHM, Mathias, 915 96 Flarken (SE)
(74) Representative: Zacco Sweden AB

(57) **Abstract**

The present disclosure relates to a method (400) for providing control data for a site for configuring, controlling and/or scheduling at least one electronic device, wherein the site is located in at least one geographical region among a set of geographical regions, wherein each geographical region in the set of geographical regions is associated to a priority level, wherein the method (400) comprises the steps of determining (410) at least one type of control data to be obtained for the at least one electronic device; determining (420) the location of the site; determining (430) the at least one geographical region corresponding to the determined location of the site. The method (400) further comprises obtaining (440) control data for the at least one electronic device from control data associated with the at least one determined geographical region based on the determined type of control data to be obtained, wherein obtaining (440) control data comprises obtaining any control data associated with the determined geographical region of a highest priority level matching the determined type of control data to be obtained, thereafter obtaining any non-obtained control data associated with the determined geographical region one priority level lower matching the determined of control data to be obtained until any control data associated with the determined geographical region of the lowest priority level has been obtained and/or control data completely matching the determined type of control data to be obtained has been obtained; and providing (450) the obtained control data to a control system of the site for configuring, controlling and/or scheduling the at least one electronic device.

## Description

### TECHNICAL FIELD

The present disclosure relates to configuring, controlling and/or scheduling electronic devices in a site.

### BACKGROUND

Sites, such as a retail store, may comprise multiple electronic devices, e.g. displays for presenting product information, to be configured, controlled and/or scheduled based on their device type and location in the site. For example, it may be desirable at certain times to have all displays located close to a specific area wherein a type of product is displayed be presenting information relating to said product. Many of the existing systems for controlling electronic devices in sites function by assigning each device a unique number and/or network address as a reference and the configurations sent from the system to the devices are based on those numbers and/or addresses. Thereby manual changes may be required if an electronic device is moved inside the site.

Another approach is to use a system able to locate the position of electronic devices inside a site, and configure, control and/or schedule each electronic device based on their location and device type. For example, such a system may configure speakers on the same floor, a large sector, of a shop installation to play the same audio, while scheduling displays to show information relating to the area of a specific product, small sector.

The same system for electronic devices may be used in a multitude of similar sites. For the sites belonging to the same retail chain manually changing each system individually may be costly and/or may risk unintended deviations between sites. An important challenge is to efficiently configure, control and/or schedule electronic devices in multiple sites.

### SUMMARY

One object of the invention is to efficiently configure, control and/or schedule electronic devices in multiple sites.

This has in accordance with the present disclosure been achieved by means of a method for providing control data for a site for configuring, controlling and/or scheduling at least one electronic device. The site is located in at least one geographical region among a set of geographical regions, wherein each geographical region in the set of geographical regions is associated to a priority level. The method comprises the steps of determining at least one type of control data to be obtained for the at least one electronic device, the step of determining the location of the site, and the step of determining the at least one geographical region corresponding to the determined location of the site. The method further comprises the step of obtaining any control data of the determined type of control data to be obtained associated with the determined geographical region of the highest priority level. Thereafter obtain any non-obtained control data of the determined type of control data to be obtained associated with the determined geographical region one priority level lower until obtaining any control data associated with the determined geographical region of the lowest priority level and/or obtaining all the control data of the determined type of control data to be obtained. The method comprises the steps of providing the obtained control data to a control system of the site for configuring, controlling and/or scheduling the at least one electronic device.

Thus, in accordance with present solution, it is first determined whether there are control data to be obtained for the determined type of control data associate with a geographical region having the highest priority level. If there is, the control data matching the determined type of control data is obtained. Thereafter obtain any non-obtained control data of the determined type of control data to be obtained associated with the determined geographical region one priority level lower until obtaining any control data associated with the determined geographical region of the lowest priority level and/or obtaining all the control data of the determined type of control data to be obtained. The method comprises the steps of providing the obtained control data to a control system of the site for configuring, controlling and/or scheduling the at least one electronic device.

This has the advantage that configuration, control and/or scheduling of electronic devices in multiple sites is enabled by associating control data to the electronic devices based on the determined type of control data to be obtained for the respective electronic device and based on at least one geographical region corresponding to the determined location of the site of the respective electronic device.

A further advantage is allowing new sites to obtain control data for electronic devices based on the site location and the electronic devices comprised in the site. A newly established site may require minimal effort for the method to configure, control and/or schedule at least one electronic device comprised in the site. Once the site location and at least one electronic device may be determined the method may be utilized to provide relevant control data to the site.

The step of obtaining control data may utilize control data associated with at least two geographical regions, wherein the control data associated with at least two geographical regions is from at least two sources. The at least two sources may be at least two servers and/or control systems of sites.

The set of geographical regions may comprise at least two geographical regions.

The set of geographical regions may comprise at least two geographical regions in a hierarchical relationship.

The set of geographical regions may comprise a global geographical region, wherein the global geographical region comprises all other geographical regions of the set of geographical regions.

The set of geographical regions may comprise a hierarchy of regions comprising a global level, a set of countries level, a country level, a set of provinces level, a province level, a city level and/or a site level. Each geographical region on a site level may be defined to only include one site.

The at least two geographical regions in a hierarchical relationship may have relative priority levels in opposite order of the geographical region's level in said hierarchy. According to some embodiments, a hierarchical relationship between geographical regions wherein a first geographical region is comprised inside a second geographical region has the second geographical region on a higher hierarchical level than the first geographical region, thereby the priority level of the first geographical region is higher than the priority level of the second geographical region.

This may have the advantage of allowing electronic devices in multiple sites to be configured, controlled and/or scheduled in an intuitive fashion wherein the local instructions, from control data associated with a smaller determined geographic region, has priority over the instructions associate with a larger determined geographical region. This geographically based priority has the further advantage of decreasing manual labour and decreasing the risk of unintended inconsistencies between sites.

According to some embodiments, a first geographical region corresponding to the city Alpha has the highest priority level, and control data associated with said first geographical region comprises instructions for displays in dairy sectors of sites to present a campaign for locally produced products for 1 minute every 2 minutes. The first geographical region is comprised in a second geographical region one priority level below. The second geographical region corresponds to the state/province Beta and control data associated with the second geographical region comprises instructions for displays in dairy sectors of sites to continuously present a commercial for dairy products sold state/province-wide. Thus displays in the dairy sector of sites in city Alpha within state/province Beta will alternate between presenting 1 minute campaign for locally produced products and 1 minute of a commercial for dairy products sold state/province-wide. By changing the control data for the geographical region corresponding to the city Alpha region and/or the province/state Beta region the scheduling of all the displays in dairy sectors may be changed.

Control data associated with a geographical region may comprise language restrictions. In an example, at least one site may be assigned a first language and upon obtaining control data each instruction of control data relating to presenting information in languages other than said first language is treated as null. At least one first language may be assigned to the site based on the geographical location of the site.

This has the advantage of reducing the risk of a site obtaining control data that will function on an electronic device and presents information unintelligible to the expected observer.

The set of geographic regions may be defined so as to cover each location covered by the set of geographical regions is covered by at least two geographical regions. In one example, the set of regions may be the geographical region representing a country and the geographical regions representing the states/provinces forming said country. An example site in a location represented by the set of geographical regions is in the country and a state/province, thus the site location is covered by two geographical regions.

The advantage of this is allowing control data to be updated with the knowledge that any site in a located within an area represented by the set of geographic regions may obtain control data associated with at least two geographical regions.

The set of geographic regions may be defined so as to cover each location covered by the set of geographical regions by at least three geographical regions.

The set of geographical regions may comprise at least three geographical regions in a hierarchical relationship, wherein the number of levels in the hierarchy of geographical regions is at least three. The number of levels in the hierarchy of geographical regions may be at least four, and/or at least five, and/or at least six.

This may have the advantage of allowing for better and more flexible utilization of the geographical regions and associated control data to provide the desired control data for sites. The number of options for tailoring control data provided to at least one site increases with the number of determined geographical regions for said site.

The type of control data to be obtained may comprises information relating to at least one type of electronic device and/or type of sector in the site.

The types of electronic devices may be displays, speakers, lighting, electrical blinds, or touchscreens.

The types of sectors may be an area related to a specific type of product; an area related to a specific theme; and/or an area related to a specific part of the site, such as an entrance, an exit, a dining area, elevators, or restrooms.

The type of control data to be obtained may comprises the device function and/or the device role. Device function may be the function such as an information point. Device role may be the role of child entertainment.

This has the advantage of allowing for electronic devices of the same device type in the same sector of a site to present different information. In one example, a site may be arranged to in have one display assigned to present entertainment for young children.

The present disclosure further relates to a system for providing control data for a site for configuring, controlling and/or scheduling at least one electronic device. The site is located in at least one geographical region among a set of geographical regions, wherein each geographical region in the set of geographical regions is associated to a priority level. The system comprises a control data centre comprising a memory storage, a processor, and communication means, wherein the memory storage comprises control data associated with at least one geographical region. The control data centre is arranged to determine at least one type of control data to be obtained based on the at least one electronic device, determine the location of the site, determine the at least one geographical region corresponding to the determined location of the site. The control data centre is further arranged to obtain any control data of the determined type of control data to be obtained associated with the determined geographical region of the highest priority level, thereafter obtain any non-obtained control data of the determined type of control data to be obtained associated with the determined geographical region one priority level lower until obtaining any control data associated with the determined geographical region of the lowest priority level and/or obtaining all the control data of the determined type of control data to be obtained. The control data centre is arranged to provide via said communication means the obtained control data to a control system of the site for configuring, controlling and/or scheduling the at least one electronic device.

This may have the advantage of enabling electronic devices in multiple sites to be configured, controlled and/or scheduled by updating the control data associated with a geographical region.

The term "control data associated with at least one geographical region" should herein be understood as "at least one set of electronic device instructions each associated with at least one geographical region".

The system may comprises at least one site.

The site may have a site format. The site format may relate to a specific retail chain or the size of the site. The site format may relate to the type of the site, such as a hotel, an arena, a shop installation, a hospital or an educational institution.

The type of control data to be obtained may be determined based on the site format of the site.

The system may comprise input means for updating control data. The control data centre may comprise input means for updating control data. The control system of a site may comprise input means for updating control data.

Updating the control data associated with a geographical region may initiate providing updated control data to at least one site in the corresponding geographical region. Providing updated control data may comprise determining if said update impacts any relevant previously provided control data to the site. If no changes to control data are determined then control data may not be provided to said site as a result of updating the control data.

This may have the advantage of allowing a system to provide control data for a large number of sites and only initiate providing control data with the sites affected by an update to control data.

The system may comprise input means for updating then defined set of geographical regions.

At least one geographical region of the set of geographical regions may be redefined.

At least one geographical region of the set of geographical regions may be assigned a priority level.

At least one geographical region may be added to and/or removed from the set of geographical regions.

This may have the advantage of more easily allowing control data associated with a geographical region to be provided control data for new set of sites as said sites are introduced.

The system be arranged to report status information from at least one site to the control data centre.

The control data centre may be configured to obtain information from a control system of a site. The obtained information may comprise information relating to electronic device operation.

The site may comprise electronic device position determining means. The site further comprising electronic device position determining means may determine the position of at least one electronic device.

This has the advantage of allowing an electronic device moved within the site from one sector into another sector to detected and obtain new instructions, thereby changing the configuration of the moved electronic device to match the new sector without requiring manual input.

The present disclosure further relates to a computer program product comprising a non-transitory computer-readable storage medium having thereon a computer program comprising program instructions, the computer program being loadable into a data processing unit and configured to cause the processing unit to carry out steps of determining at least one type of control data to be obtained for the at least one electronic device, determining the location of a site, determining the at least one geographical region among a set of geographical regions corresponding to the determined location of the site, wherein each geographical region in the set of geographical regions is associated to a priority level. Further causing the computer to carry out the step of obtaining any control data of the determined type of control data to be obtained associated with the determined geographical region of the highest priority level, thereafter obtain any non-obtained control data of the determined type of control data to be obtained associated with the determined geographical region one priority level lower until any obtaining control data associated with the determined geographical region of the lowest priority level and/or obtaining all the control data of the determined type of control data to be obtained. Further causing the computer to carry out the step of providing the obtained control data to a control system of the site for configuring, controlling and/or scheduling the at least one electronic device.

The computer program product may be comprised in a control data centre. The computer program product may be comprised in a control system of a site.

### BRIEF DESCRIPTION OF THE DRAWINGS

- Fig. 1: depicts schematically a site
- Fig. 2: depicts schematically a system connecting to a plurality of sites
- Fig. 3a and 3b: shows schematically an illustration of a set of geographical regions.
- Fig. 4: depicts schematically a method for providing control data for a site.
- Fig. 5: depicts schematically control data and type of control data to be obtained.
- Fig. 6: depicts schematically a computer program product.

### DETAILED DESCRIPTION

Throughout the figures, same reference numerals refer to same parts, concepts, and/or elements. Consequently, what will be said regarding a reference numeral in one figure applies equally well to the same reference numeral in other figures unless not explicitly stated otherwise.

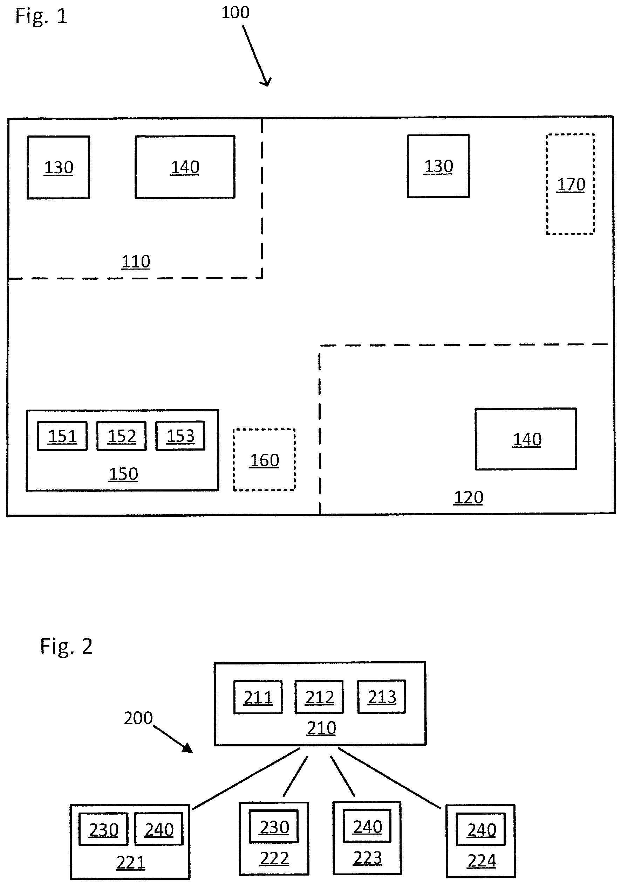

Fig. 1 depicts schematically an example site 100 comprising electronic devices 130, 140 of two device types. In this example two areas of the site 100 have been defined as two sectors 110, 120, each of a different sector type. The site 100 further comprises a control system 150 arranged to configure, control and/or schedule the electronic devices 130, 140. The control system 150 comprises a memory storage 151, a processor 152 and/or communication means 153. The memory storage 151 may comprise control data comprising instructions to when executed on the processor 152 configure, control and/or schedule the electronic devices 130, 140. The communications means 153 are arranged to communicate with the electronic devices 130, 140. The communications means 153 may be arranged to obtain control data.

The site may comprise location-determining means 160, such as a GPS. The location-determining means 160 may be arranged to provide location information to the control system 150.

In the example of Fig. 1, the site 100 comprises two types of electronic devices 130, 140, speakers 130 and displays 140. The two types of sectors 110, 120 are a dairy sector 110 and a vegetable sector 120. The control system 150 comprises control data comprising instructions for electronic devices 130, 140 based on device type and sector type. The control data may comprise instructions for electronic devices 130, 140 not inside any sector 110, 120. In accordance with the control data, the display 140 and speaker 130 in the dairy sector 110 may be configured to promote specific dairy products. In accordance with the control data, the display 140 in the vegetable sector 120 may be configured to show seasonal vegetable products. The control data may comprise instructions for the speaker 130 outside the sectors 110, 120 to provide general information related to the site 100.

The control data may comprise instructions for electronic devices 130, 140 based on device type and/or sector type and/or device function and/or device role. Device function may be information point. Device role may be children's entertainment.

The control data may comprise instructions for electronic devices 130, 140 based one time of day and/or date.

The site 100 may be defined as one sector 110, 120.

The sectors 110, 120 in a site 100 may overlap.

At least two overlapping sectors 110, 120 may have an order of priority.

At least two overlapping sectors 110, 120 may have a hierarchical relationship.

The site 100 may have no sectors 110, 120.

The site 100 may have a site format. The site format may relate to a specific retail chain or the size of the site 100. The site format may relate to the type of the site 100, such as a hotel, an arena, a shop installation, a hospital or an educational institution.

The site 100 may comprise electronic device position determining means 170. The example site 100 of Fig. 1 further comprising electronic device position determining means 170 may determine the position of at least one electronic device 130, 140 and provide said position to the control system 150.

This has the advantage of allowing as an example based on Fig. 1 the display 140 in the dairy sector 110 moved to the vegetable sector 120 to receive new instructions from the control system 150, thereby changing the content presented on the moved display 140 to show vegetable related content without requiring manual input.

Fig. 2 depicts schematically an example of a system 200 connecting to a plurality of sites 221-224. The example system 200 comprises a control data centre 210 arranged to provide control data for the plurality of sites 221-224. The control data centre 210 comprises a memory storage 211 comprising control data associated with at least one geographical region, a processor 212, and communication means 213.

The control data centre 210 may be located in a site 221. The control data centre 210 may be a virtual server. The control data of the control data centre 210 may be updated remotely. Updating the control data may result in a change in configuring, controlling and/or scheduling of several electronic devices 230, 240 across a plurality of sites 221-224, by the control data centre 210 providing instructions for electronic device to the plurality of sites 221-224.

The control data centre 210 may comprise communication means 213 arranged to communicate with at least one control system comprised in at least one site 221. The control system of a site 221 may be arranged to request control data from the control data centre 210. The control system of a site 221 may be arranged to request control data from the control data centre 210 based on site format and/or device type and/or sector type and/or device function and/or device role of electronic devices 230, 240 comprised in the site 221. The term "control data associated with at least one geographical region" should herein be understood as "at least one set of electronic device instructions each associated with at least one geographical region".

The control data centre 210 may be a cloud server.

The control data of the control data centre 210 may be updated via at least one control system of at least one site 221.

The obtaining of control data for the site 221 may be initiated at the control data centre 210 and/or the control system of a site 221.

The control data centre 210 may be arranged to provide control data based on the geographic location of the site 221.

Control data may be provided to the site 221 based on at least two geographical regions including the location of the site 221.

Control data may be associated with a geographical region.

The at least two geographical regions may have an order of priority. The at least two geographical regions may each have a priority level.

The at least two geographical regions may have a hierarchical relationship and a priority order based on said hierarchical relationship, whereby a site 221 located inside two or more geographical regions attempts to obtain the corresponding control data associated with the geographic region in order of highest priority.

The at least two geographical regions in a hierarchical relationship may assign the highest priority to geographical regions in order of lowest hierarchical level, thereby for geographical regions within a chain of the hierarchy the smallest geographical region is assigned the highest priority and the largest region is assigned the lowest priority.

According to some embodiments, the present disclosure relates to a system 200 for providing control data for a site 221 for configuring, controlling and/or scheduling at least one electronic device 230, 240. The site 221 is located in at least one geographical region among a set of geographical regions, wherein each geographical region in the set of geographical regions is associated to a priority level. The system 200 comprises a control data centre 210 comprising a memory storage 211, a processor 212, and communication means 213, wherein the memory storage 211 comprises at least control data associated with at least one geographical region. The control data centre 210 is arranged to determine at least one type of control data to be obtained for the at least one electronic device 230, 240, determine the location of the site 221, and determining the at least one geographical region corresponding to the determined location of the site. The control data centre 210 is further arranged to obtain any control data of the determined type of control data to be obtained associated with the determined geographical region of the highest priority level, thereafter obtain any non-obtained control data of the determined type of control data to be obtained associated with the determined geographical region one priority level lower until obtaining any control data associated with the determined geographical region of the lowest priority level and/or obtaining all the control data of the determined type of control data to be obtained. The control data centre 210 is further arranged to provide via said communication means 213 the obtained control data to a control system of the site 221 for configuring, controlling and/or scheduling the at least one electronic device 230, 240.

The system 200 may comprise at least one site 221.

The site 221 may have a site format. The site format may relate to a specific retail chain or the size of the site 221. The site format may relate to the type of the site 221, such as a hotel, an arena, a shop installation, a hospital or an educational institution.

The type of control data to be obtained may be based on the site format of the site 221.

The system 200 may comprise input means for updating control data. The control data centre 210 may comprise input means for updating control data. The control system of a site 221 may comprise input means for updating control data.

Updating the control data associated with a geographical region may initiate providing updated control data for at least one site 221 in the corresponding geographical region. The control data centre 210 may be arranged to providing updated control data, wherein providing updated control data comprises determining if said update impacts any relevant previously provided control data to the site. If no changes to control data are determined then control data may not be provided to said site as a result of updating the control data.

The system 200 may be arranged to report status information from at least one site 100 to the control data centre 210. The control data centre 210 may be configured to obtain information from a control system of a site 221. The obtained information may comprise information relating to electronic device operation.

The control data centre 210 may be arranged to obtain control data of the determined type of control data to be obtained from at least two sources. The at least two sources may be at least two servers and/or control systems comprised in a site 221.

Control data associated with a geographical region may comprise language restrictions. In an example, at least one site 221 may be assigned a first language and upon obtaining control data each instruction of control data relating to presenting information in languages other than said first language is treated as null. At least one first language may be assigned to the site 221 based on the geographical location of the site 221.

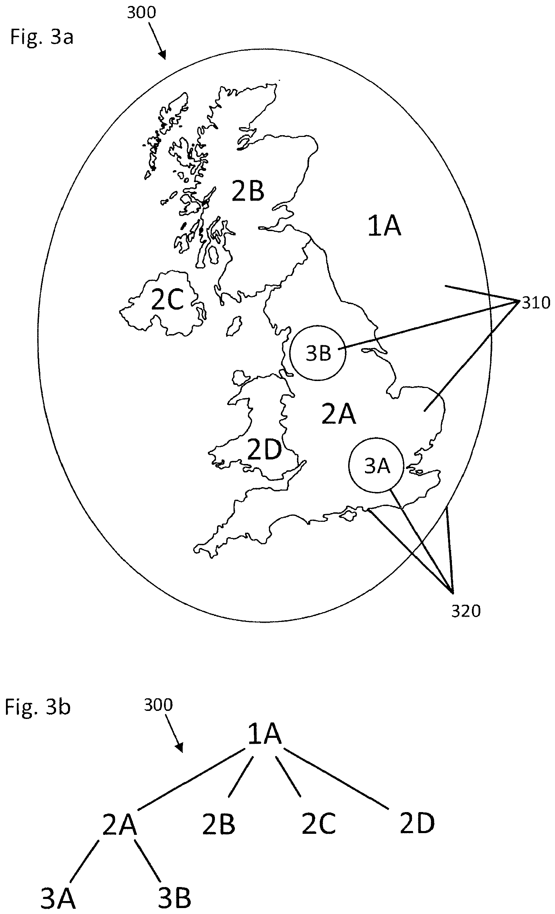

Fig. 3a and 3b shows schematically an illustration of a set of geographical regions. Fig. 3a shows an example of an illustration representing a part of Earth's surface on which a set of geographical regions 300 have been defined. The example set of geographical regions 300 comprise geographical regions 1A, 2A, 2B, 2C, 2D, 3A and 3B 310. The geographical region 1A 310 encircles the whole area representing Earth's surface. The geographical region 1A 310 further comprises four geographical regions 2A, 2B, 2C and 2D 310. The geographical region 2A 310 further comprises two geographical regions 3A and 3B 310. The geographical regions 310 are defined by at least one border 320 encircling an area of a representation of at least one part of Earth's surface. In this example set of geographical regions 300 an example site located inside the geographical region 3A 310 is inside the three geographical regions 3A, 2A and 1A 310, wherein among them the geographical region 1A 310 is on the highest hierarchical level and the geographical region 3A is on the lowest level.

The set of geographical regions 300 may be defined so that each location inside the geographical region 310 of the highest hierarchical level is inside at most one geographical region 310 of the same hierarchical level. The example set of geographical regions 300 in Fig. 3a fulfils said criteria as no geographical regions 310 of the same hierarchical level overlap and no geographical region 310 overlaps two higher level geographical regions 310 of the same hierarchical level.

At least one geographical region 310 may comprise at least two unconnected geographical regions. In an alternative example geographical regions 2B and 2D 310 may together be redefined as geographical region 2E 310 (not shown), thereby creating a geographical region 310 with two borders 320 each encircling a separate representation of a part of Earth's surface.

The set of geographical regions 300 may comprise a hierarchy of regions comprising a global level, a set of countries level, a country level, a set of provinces level, a province level, a city level and/or a site level. In an example based on Fig. 3 A1 is on the global level, 2B+2A is on the set of countries level, 2A is on the country level, 3A+3B is on the set of provinces level, and 3A is on the province level.

Each geographical region 300 on the site level may be defined as only including one site.

The set of geographical regions 300 may comprise at least three geographical regions 310 in a hierarchical relationship, wherein the number of levels in the hierarchy of geographical regions 310 is at least three. The number of levels in the hierarchy of geographical regions 310 may be at least four, and/or at least five, and/or at least six.

Fig. 3b shows an illustration of an example relationship between a plurality of geographical regions 310 in a hierarchy. The example in Fig. 3b shows the hierarchical relationship of the example set of geographical regions 300 from Fig. 3a. The example set of geographical regions 300 are related in such a way that from any starting point in the hierarchy it is unambiguous which geographical region 310 is directly above in the hierarchy. For an example site located inside at least two geographical regions 310, for example 2B and 1A, the geographical region of the lowest level in the hierarchy corresponds to 2B the smallest, most local, geographical region.

Control data may be associated with a geographical region 310.

Control data associated with a geographical region 310 may be stored in a control data centre.

A site may be provided control data associated with a geographical region 310 corresponding to the location of the site. For example, a site located inside of geographical region 2B and 1A may obtain parts of control data associated with the geographical region 2B and 1A.

A site may be provided any relevant control data associated with each geographic region 310 overlapping the site location based on a priority order.

The priority level of at least two geographical regions 310 in a hierarchical relationship may be assigned in order of lowest to highest position within the hierarchy. For a hierarchy such as shown in Fig. 3b the priority is highest for the smallest geographical region 310 overlapping a location. In the example of Fig. 3 an example site located inside 3B is inside geographical regions 1A, 2A and 3B 310, among these geographical regions 310 3B has the highest priority, then 2A, and 1A has the lowest priority.

The set of geographical regions 300 may comprise at least two hierarchies of geographical regions 310.

The set of geographical regions 300 may comprise a global geographical region 310, wherein the global geographical region 310 comprises all other geographical regions 310 of the set of geographical regions 300. In the example set of geographical regions 300 of Fig. 3a the geographical 1A 310 may be considered a global geographical region 310.

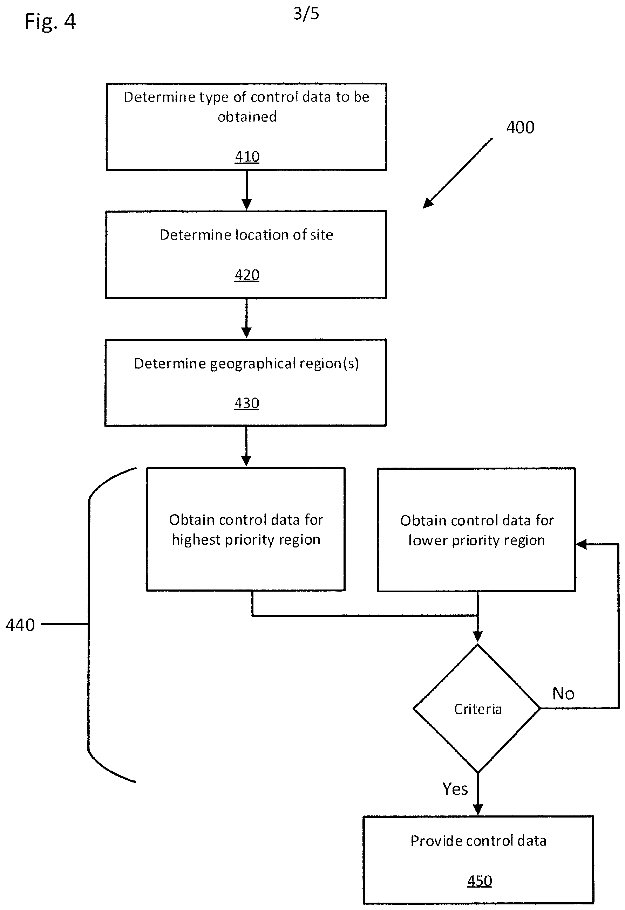

Fig. 4 depicts schematically a method for providing control data for a site. The method is suitable for providing control data to a site for configuring, controlling and/or scheduling at least one electronic device comprised in said site. The method 400 comprises the steps of determining 410 the type of control data to be obtained, determining 420 the location of the site, determining 430 at least one geographical region corresponding to the determined location of the site, obtaining 440 control data, and providing 450 the control data to a control system of the site.

The step of determining 410 the type of control data to be obtained may be determined based on device type and/or sector type and/or device function of at least one electronic device comprised in the site. According to some embodiments, the determined type of control data to be obtained may relate to instructions for displays in dairy sectors and instructions for displays in vegetable sectors.

The method may be initiated at the site and/or at a remote location.

The type of electronic device may be displays, speakers, lighting, electric blinds, and/or touchscreens.

The type of sector is an area related to a specific type of product; an area related to a specific theme; and/or an area related to a specific part of the site, such as an entrance, an exit, a dining area, elevators, and/or restrooms.

The step of determining 410 the type of control data to be obtained may be determined based on the site format of the site. The site format may relate to a specific retail chain or the size of the site. The site format may relate to the type of the site, such as a hotel, an arena, a shop installation, a hospital or an educational institution.

The type of control data to be obtained may comprise information relating to the site format of said site.

The site may comprise means for determining the location of at least one electronic device. A site comprising means for determining the location of at least one electronic device may automatically determine any sector each of the at least one electronic device is located inside.

The control data may comprise instructions separated into time intervals. According to some embodiments, control data may comprise instructions for displays in dairy sectors to each day present a first video content between 07:00:00 to 14:00:00, and a second video content between 14:00:00 to 21:00:00. Time intervals may include date and/or time.

The type of control data to be obtained may comprise at least one time interval.

The type of control data to be obtained may related to electronic device instructions for the upcoming 24 hours. The type of control data to be obtained may be related to electronic device instructions for the upcoming 1, 2, 4, 8, 12 and/or 48 hours.

The type of control data to be obtained may be determined based on information obtained from a control system comprised in the site.

The type of control data to be obtained may be stored in a memory storage in a data control centre and/or another site.

At least part of the type of control data to be obtained may be determined based on information obtained from at least one electronic device comprised in the site.

The step of determining 420 the location of the site may comprise obtaining location information and/or geographical region information from a memory storage of the control system of the site.

The step of determining 420 the location of the site may comprise utilizing location-determining means at the site, such as GPS.

The step of determining 420 the location of the site may comprise utilizing user input means at the control data centre and/or the control system of the site.

The step of determining 420 the location of the site may comprise obtaining location information from a memory storage comprised in a control data centre.

The step of determining 430 the at least one geographical region among the set of geographical regions corresponding to the determined location of the site, may comprise identifying any geographical region enclosing the determined location of the site, wherein the at least one geographical region is a geographical region representing a part of Earth's surface.

The step of determining 430 the at least one geographical region among the set of geographical regions corresponding to the determined location of the site may comprise obtaining location information and/or geographical region information from at least one memory storage comprised in a control data centre and/or the control system of the site.

The set of geographical regions may be defined so each site is located in at least two geographical regions. For a set of geographical regions comprising geographical regions corresponding to a country and all provinces/states comprising said country, each site located inside said country will be inside at least two geographical regions.

The step of determining 430 the at least one geographical region among the set of geographical regions corresponding to the determined location, may comprise determining the priority level of the at least one determined geographical region. According to some embodiments, a site location inside two geographical regions, a first geographical region corresponding to a province/state and a second geographical region corresponding to a country, wherein the second geographical region comprises the first geographical region. The first geographical region is assigned a higher priority, such as priority level of 60, and the second geographical region is assigned a lower priority, such as priority level of 30.

The set of geographical regions may comprise at least two geographical regions ordered in a hierarchical relationship. The priority level may be assigned to geographical regions in an order opposite to the geographic regions level in the hierarchy. The number of levels in the hierarchy of geographical regions may be at least three. The number of levels in the hierarchy of geographical regions may be at least four, at least five and/or at least six.

The at least two geographical regions in a hierarchical relationship may at most be comprised in one geographical region with the same priority level.

The step of obtaining 440 control data may comprise obtaining any control data of the determined type of control data to be obtained from control data associated with the determined geographic region with the highest priority level. The step of obtaining 440 control data may thereafter obtain any non-obtained control data of the type of control data yet to be obtained from control data associated with the next determined geographic region in order of priority level, until obtaining any control data associated with the determined geographical region of lowest priority level and/or obtaining all the control data of the determined type of control data to be obtained.

The step of obtaining 440 control data wherein at least two geographical regions are in a hierarchical relationship may determine the lowest hierarchical level geographical region to have the highest priority level and the highest hierarchical level geographical region to have the lowest priority level. The geographical representation of defining geographical region priority level in this manner is that control data associated with the smallest, most local, of any determined geographical regions is most preferably obtained; thereafter control data from successively larger geographical regions is obtained.

The set of geographical regions may comprise at least two geographical regions representing the same part of Earth's surface.

At least two geographical region representing the same part of Earth's surface may be set to different priority levels. According to some embodiments, two geographical regions may be global geographical regions, each comprising all other geographical regions of the set of geographical regions. The first geographical region may be set to the lowest priority of the set of geographical regions thereby representing the control data selected if nothing relevant is obtained in control data associated with determined geographical regions of higher priority. The second surface may be set to the highest priority the set of geographical regions thereby representing control data relating to important national marketing campaigns or seasonal events.

The step of providing 450 the control data to the control system of the site may comprise transmitting the control data to the site via telecommunication infrastructure.

The step of providing 450 the control data to the control system of the site may comprise the control system storing at least part of the obtained control data on a memory storage.

The control system in the site may be arranged to at a predetermined time each day initiate the method 400 to obtain control data for the upcoming at least 24 hours.

The control data centre may be arranged to at a predetermined time initiate the method 400.

The control data centre may be arranged to initiate the method 400 based on updates made to the control data. The control data centre may be arranged to initiate the method 400 to provide control data to at least one site impacted by updates made to the control data.

The method 400 may provide control data for at least two sites.

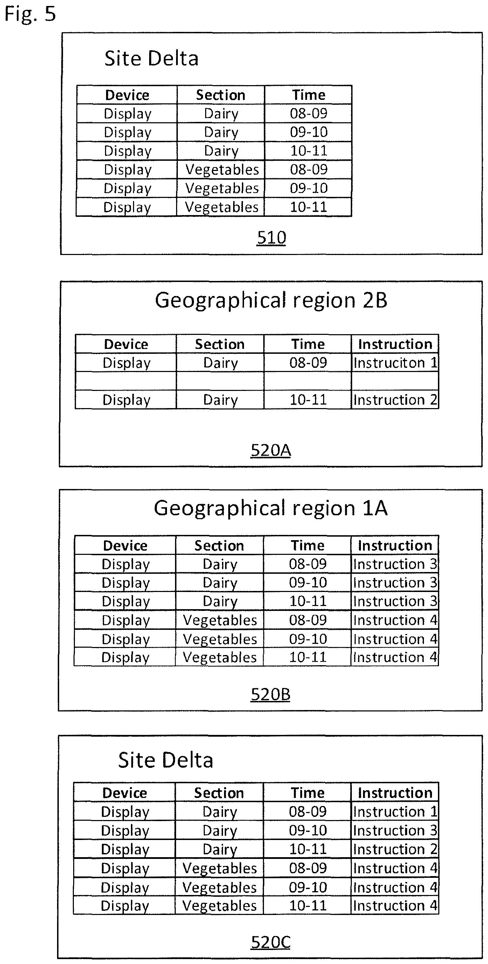

Fig. 5 depicts examples representing control data 520A, 520B, 520C and type of control data to be obtained 510. The type of control data to be obtained 510 is in this example represented by a table comprising information relating to device type, section type and time. The type of control data to be obtained 510 comprises information relating to the desired control data 520C to be provided to the site.

The type of control data to be obtained 510 may comprise information relating to additional electronic device identifiers, such as the role and/or the function of the device.

The type of control data to be obtained 510 may comprise information relating to site format.

The type of control data to be obtained 510 may comprise information relating to at least one language. The at least one language may be a preferred language of the content presented by electronic devices at the site.

The control data 520A, 520B associated with a geographical region may comprise instructions for a specific device type and/or sector type and/or time interval and/or site format.

Control data 520A, 520B associated with a geographical region may be associated with at least two geographical regions.

The control data 520A, 520B associated with a geographical region in this example is represented by tables comprising device type, section type, time and instruction. In this example, the first three columns of the tables representing control data 520A, 520B associated with a geographical region is matched with the type of control data to be obtained 510, and for matched rows the corresponding row in the control data 520A, 520B associated with a geographical region including the instruction is obtained as control data 520Cto be provided to the site.

The type of control data to be obtained 510 and the control data 520A, 520B associated with a geographical region is in no way limited by the example in Fig. 5. The tables in Fig. 5 aim to visualize the difference between the type of control data to be obtained 510, control data 520A, 520B associated with a geographical region, and control data 520C to be provided to the site.

According to some embodiments, the determined type of control data to be obtained 510 is the type of control data to be obtained 510 represented in Fig. 5, and the control data 520A, 520B associated with the two geographical regions in Fig. 5 are the control data 520A, 520B associated with geographic region 2A and 1A, wherein geographical region 2B has the highest priority level. The step of obtaining control data 520C comprises obtaining of any control data 520 of the determined type of control data to be obtained 510 from control data 520A associated with the determined geographic region with the highest priority level, resulting in obtaining control data 520 relating to the first and third row of the control data 520A associated with geographic region 2A. Thereafter obtaining any non-obtained type of control data to be obtained control data 520 of the type associated with the determined geographical region one priority level lower, wherein non-obtained type of control data to be obtained comprises the second, fourth, fifth and sixth row of the determined type of control data to be obtained 510 in Fig. 5. Matching non-obtained type of control data to be obtained against control data 520B associated with geographic region 1A, thereby obtaining all the control data 520 of the determined type of control data to be obtained 510. Combining the control data 520 obtained from control data 520A, 520B associated with geographical region 2A and 1A forms the control data 520C to be provided to the site.

The physical location of the memory storage comprising one or more control data associated to a geographical region is in no way limited by the corresponding one or more regions.

One or more control data associated with a geographical region may be located in a control data centre. The control data centre may be located in a site. The control data centre may be located outside each geographical region. The control data centre may comprise a virtual server.

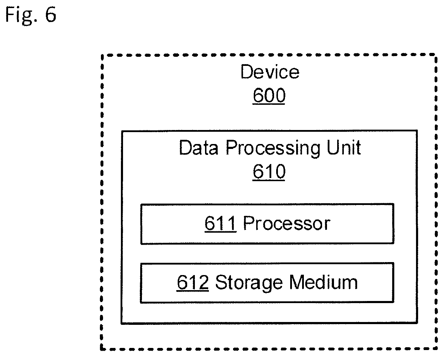

Fig. 6 depicts a computer program product comprising a non-transitory computer-readable storage medium 612. The non-transitory computer-readable storage medium 612 having thereon a computer program comprising program instructions. The computer program is loadable into a data processing unit 610 and is configured to cause a processor 611 to carry out the method for providing control data for a site for configuring, controlling and/or scheduling at least one electronic device as defined in fig. 4 when the computer program is run by the data processing unit 610.

The data processing unit 610 may comprise the non-transitory computer-readable storage medium 612.

The data processing unit 610 may be comprised in a device 600.

The device 600 may be a personal computer, a server or a cloud server.

The device 600 may be a control data centre or a control system of a site.

## Claims

1. A method for providing control data (520) for a site (100) for configuring, controlling and/or scheduling at least one electronic device (130, 140) comprised in the site (100), wherein the site (100) is located in at least one geographical region (310) among a set of geographical regions (300), wherein each geographical region (310) in the set of geographical regions (300) is associated to a priority level, wherein the set of geographical regions (300) comprises at least two geographical regions (310) in a hierarchical relationship and wherein the priority level is assigned to geographical regions (310) in an order opposite to the level in the hierarchy of the geographic regions (310), wherein the site (100) is arranged to communicate with a control data centre (210) storing control data (520) for electronic devices (130, 140), and wherein the method (400) comprises the steps of
determining (410) at least one type of control data to be obtained (510) for the at least one electronic device (130, 140),
determining (420) the location of the site (100),
determining (430) the at least one geographical region (310) corresponding to the determined location of the site,
obtaining (440) from the control data centre (210), control data (520) for the at least one electronic device (130, 140) from control data (520) associated with the at least one determined geographical region based on the determined type of control data to be obtained (510), wherein obtaining (440) control data (520) comprises
obtaining any control data (520) associated with the determined geographical region (310) of a highest priority level matching the determined type of control data to be obtained (510), thereafter obtaining any non-obtained control data (520) associated with the determined geographical region (310) one priority level lower matching the determined type of control data to be obtained (510) until any control data (520) associated with the determined geographical region (310) of the lowest priority level has been obtained and/or control data (520) completely matching the determined type of control data to be obtained (510) has been obtained, and
providing (450) the obtained control data (520) to a control system (150) of the site (100) for configuring, controlling and/or scheduling the at least one electronic device (130, 140).

2. The method according to claim 1, wherein the number of levels in the hierarchy of geographical regions (310) is at least three.

3. The method according to claim 1 or 2, wherein the set of geographic regions (300) includes each site (100) in at least two geographical regions (310).

4. The method according to any of the preceding claims, wherein the determined type of control data to be obtained (510) comprises information relating to at least one type of electronic device and/or type of sector in the site (100).

5. The method according to claim 4, wherein the type of electronic device may be displays, speakers, lighting, electric blinds, or touchscreens.

6. The method according to claim 4 or 5, wherein the type of sector (110, 120) is an area related to a specific type of product; an area related to a specific theme; and/or an area related to a specific part of the site, such as an entrance, an exit, a dining area, elevators, or restrooms.

7. A system for providing control data (520) for a site (100) for configuring, controlling and/or scheduling at least one electronic device (130, 140) comprised in the site (100), wherein the site (100) is located in at least one geographical region (310) among a set of geographical regions (300), wherein each geographical region (310) in the set of geographical regions (300) is associated to a priority level, wherein the set of geographical regions (300) comprises at least two geographical regions (310) in a hierarchal relationship and wherein the priority level is assigned to geographical regions (310) in an order opposite to the level in the hierarchy of the geographic regions (310), the system (200) comprises a control data centre (210) comprising a memory storage (211), a processor (212), and communication means (213), wherein the memory storage (211) comprises control data (520) associated with at least one geographical region (310), wherein the control data centre (210) is arranged to determine at least one type of control data to be obtained (510) based on the at least one electronic device (130, 140), determine the location of the site (100), determining the at least one geographical region (310) corresponding to the determined location of the site, obtain any control data (520) of the determined type of control data to be obtained (510) associated with the determined geographical region (310) of the highest priority level, thereafter obtain any non-obtained control data (520) of the determined type of control data to be obtained (510) associated with the determined geographical region (310) one priority level lower until obtaining any control data (520) associated with the determined geographical region (310) of the lowest priority level and/or obtaining all the control data (520) of the determined type of control data to be obtained (510), and provide via said communication means (213) the obtained control data (520) to a control system (150) of the site (100) for configuring, controlling and/or scheduling the at least one electronic device (130, 140).

8. The system according to claim 7, wherein the system (200) is arranged to provide control data (520) for at least two sites (100).

9. The system according to claim 7 or 8, wherein the system (200) comprises at least one site (100).

10. The system according to any of claims 7 to 9, wherein the system (200) comprises input means for updating control data (520).

11. A computer program product comprising a non-transitory computer-readable storage medium (612) having thereon a computer program comprising program instructions, the computer program being loadable into a data processing unit (610) and configured to cause the processing unit (610) to carry out a method for providing control data (520) for a site (100) for configuring, controlling and/or scheduling at least one electronic device (130, 140) comprised in the site (100), wherein the site (100) is located in at least one geographical region (310) among a set of geographical regions (300), wherein each geographical region (310) in the set of geographical regions (300) is associated to a priority level, wherein the set of geographical regions (300) comprises at least two geographical regions (310) in a hierarchal relationship and wherein the priority level is assigned to geographical regions (310) in an order opposite to the level in the hierarchy of the geographic regions (310), wherein a control data centre (210) stores control data (520) for electronic devices (130, 140) and is arranged to communicate with the site (100), wherein the method (400) comprises the steps of determining (410) at least one type of control data to be obtained (510) for the at least one electronic device (130, 140), determining (420) the location of a site (100) determining (430) at least one geographical region (310) among a set of geographical regions (300) corresponding to the determined location of the site, wherein each geographical region (310) has a priority level, obtaining (440) from the control data centre (210), any control data (520) of the determined type of control data to be obtained (510) associated with the determined geographical region (310) of the highest priority level, thereafter obtaining any non-obtained control data (520) of the determined type of control data to be obtained (510) associated with the determined geographical region (310) one priority level lower until any obtaining control data (520) associated with the determined geographical region (310) of the lowest priority level and/or obtaining all the control data (520) of the determined type of control data to be obtained (510), and providing (450) the obtained control data (520) to a control system (150) of the site (100) for configuring, controlling and/or scheduling the at least one electronic device (130, 140).
